# EUROPÄISCHE PATENTSCHRIFT

(11) **EP 3 134 657 B1**
(45) Veröffentlichungstag und Bekanntmachung des Hinweises auf die Patenterteilung: **27.11.2019**
(21) Anmeldenummer: 15726521.6
(22) Anmeldetag: 09.04.2015
(51) Int. Cl.: F16D 13/58

(54) **MONTAGEOPTIMIERTE REIBUNGSKUPPLUNG MIT KRAFT- UND/ODER STOFFSCHLÜSSIG ANEINANDER BEFESTIGTEN HEBELFEDERBOLZENTEILABSCHNITTEN**
MOUNTING-OPTIMIZED FRICTION CLUTCH HAVING LEVER SPRING PIN SUBSECTIONS THAT ARE FORCE-LOCKED OR BONDED WITH ONE ANOTHER
EMBRAYAGE À FRICTION OPTIMISÉ POUR LE MONTAGE, À SEGMENTS PARTIELS DE BOULON DE RESSORT DE LEVIER FIXÉS LES UNS AUX AUTRES À FORCE ET/OU PAR LIAISON DE MATIÈRE

(30) Priorität: 25.04.2014 DE 102014207820
(43) Veröffentlichungstag der Anmeldung: 01.03.2017
(73) Patentinhaber: Schaeffler Technologies AG & Co. KG, 91074 Herzogenaurach (DE)
(72) Erfinder: VOORSPOELS, Ludovic, F-67410 Drusenheim (FR); FOHRER, Thierry, F-67850 Offendorf (FR); MERCKLING, Tony, F-67340 Schillersdorf (FR)
(86) Internationale Anmeldenummer: PCT/DE2015/200251
(87) Internationale Veröffentlichungsnummer: WO 2015/161850

(56) Entgegenhaltungen:
- GB-A- 1 204 539
- US-A- 5 960 921

## Beschreibung

Die Erfindung betrifft eine Reibungskupplung für einen Antriebsstrang eines Kraftfahrzeugs, wie eines PKWs, eines LKWs oder eines sonstigen Nutzfahrzeugs, mit einem Deckel, an dem über einen Hebelfederbolzen ein Hebel, insbesondere eine vorzugsweise als Tellerfeder ausgeführte Hebelfeder gelagert ist, wobei der Hebelfederbolzen einen Schaft aufweist, der einen zum Außendurchmesser des Schafts vergrößerten / erweiterten Kopf besitzt, und wobei der Schaft vorzugsweise entlang seiner axialen Erstreckung zumindest teilweise von einer Buchse umgeben ist.

Eine solche Reibungskupplung mit einem mehrteiligen, insbesondere einem zweiteiligen Hebelfederbolzen, ist beispielsweise aus der GB 1204539 A, der DE 10 2012 215 273 A1 oder der DE 2013 214 702 A1 bekannt. Diese Reibungskupplungen für einen Antriebsstrang eines Kraftfahrzeugs weisen jeweils eine Anpressplatte auf, die drehfest, jedoch axial begrenzt verlagerbar mit einem Gehäusedeckel verbunden ist. Zur Kraftbeaufschlagung der Anpressplatte in einer axialen Richtung der Reibungskupplung ist ein Hebel, nämlich eine vorzugsweise als Tellerfeder ausgebildete Hebelfeder vorgesehen, um eine Kupplungsscheibe zwischen der Anpressplatte und einer Gegenplatte einzuklemmen. Die Reibungskupplung weist weiter eine Hebelfederzentrierung zum Zentrieren der Hebelfeder bei Axialschwingungen der Anpressplatte und/oder der Hebelfeder gegenüber dem Gehäuse auf. Dabei ist der Hebelfederbolzen mit einer darum angeordneten Hülse zweiteilig ausgebildet.

Obwohl sich eine derartige Reibungskupplung mit einem zweiteiligen Hebelfederbolzen durch eine vergleichsweise hohe Lebensdauerfestigkeit und eine gut handhabbare Betätigung auszeichnet, hat es sich in der Praxis gezeigt, dass sich die Montage einer derartigen Reibungskupplung aufgrund des zweiteilig ausgebildeten Hebelfederbolzens relativ aufwändig gestaltet. Insbesondere beim Einsetzen zwischen einem Gehäuse und der Hebelfeder hat sich der zweiteilige Aufbau des Hebelfederbolzens als vergleichsweise schwierig montierbar erwiesen.

Es ist daher die Aufgabe der vorliegenden Erfindung, die aus dem Stand der Technik bekannten Nachteile zu beseitigen oder zu mindern. Ferner liegt die Aufgabe vor, eine Reibungskupplung für einen Antriebsstrang eines Kraftfahrzeugs zu schaffen, bei der unter Einsatz konstruktiv möglichst einfacher Mittel eine vergleichsweise einfache Montage und/oder Vormontage eines mehrteilig ausgeführten Hebefelderbolzens durchführbar ist.

Diese Aufgabe wird bei einer gattungsgemäßen Reibungskupplung durch die Merkmale des Anspruchs 1 gelöst. Die Buchse / Hülse ist kraft- oder stoffschlüssig am Schaft oder am Kopf festgelegt, wobei beide Verbindungsartenauch miteinander kombiniert werden können.

Erfindungsgemäß stehen somit gleich mehrere vorteilhafte Verbindungsmöglichkeiten zur Verfügung, eine separat zu einem Kopf und einem Schaft ausgebildete Buchse / Hülse am Schaft und/oder dem Kopf derart festzulegen oder zu befestigen, dass sich der so ausgebildete, wenigstens zweiteilige Hebelfederbolzen auf relativ einfache Weise (vor-)montieren lässt. Denn bereits vor dem Einbringen des wenigstens zweiteiligen Hebelfederbolzens als Lagerung / Lagerelement zwischen dem nach Art eines Gehäusedeckel ausgebildeten Deckel und der Hebelfeder / Tellerfeder sind die einzelnen, separat zueinander ausgebildeten Komponenten des Hebelfederbolzens miteinander verbunden. Somit können sie beim Einbauvorgang nicht auseinanderfallen. Dadurch ist das Einsetzen des Hebelfederbolzens zwischen Deckel und Hebelfeder gegenüber einer Ausführungsform, bei der die Buchse / Hülse nicht am Schaft oder Kopf festgelegt ist, deutlich vereinfacht.

Die Festlegung zwischen Schaft oder Kopf und Buchse /Hülse kann dauerhaft für die gesamte Lebensdauer des Hebelfederbolzens bzw. der Reibungskupplung oder nur für eine temporäre Festlegung ausgelegt sein. Für eine bloße Vormontage des Hebelfederbolzens kann eine temporäre Festlegung für die Zeitdauer bis der Hebelfederbolzen an dem Deckel und/oder der Hebelfeder angeordnet ist ausreichend sein.

Vorteilhafte Ausführungsformen der Erfindung sind in den Unteransprüchen beansprucht und werden nachfolgend näher erläutert.

So ist es für eine vergleichsweise hohe Lebensdauer der Reibungskupplung von Vorteil, wenn die Reibungskupplung eine mit der Hebelfeder zusammenwirkende Verschleißnachstelleinrichtung aufweist. Dabei kann die Verschleißnachstelleinrichtung beispielsweise nach Art einer kraft- oder weggesteuerten Verschleißnachstelleinrichtung, etwa einer self-adjustingclutch (SAC), ausgeführt sein.

Eine weitere erfindungsgemäße Variante der Erfindung sieht vor, dass zwischen der Innenseite der Buchse / Hülse und der Außenseite des Schafts, das heißt einer äußeren Mantelfläche des Schafts, ein Gewinde eingesetzt ist. Insbesondere kann die Innenseite der Buchse ein Innengewinde und die Außenseite des Schafts ein Außengewinde aufweisen. In Betracht kommen hierfür prinzipiell alle bekannten Gewindetypen und -geometrien. Das Gewinde kann auf die Mantelfläche des Schafts aufgeschnitten und in die Innenseite der Buchse / Hülse gebohrt sein. Auf diese Weise können der Schaft und die Buchse / Hülse für eine Vormontage und/oder einen Zusammenbau in Wirkeingriff gebracht bzw. zusammengeschraubt werden. Es kann aber auch ein Gewindeeinsatz in die Buchse / Hülse eingebracht, vorzugsweise eingepresst werden, um den Fertigungsschritt des Gewindebohrens einzusparen.

Um den Hebelfederbolzen mit noch geringerem konstruktivem Aufwand (vor-)montieren zu können, ist es erfindungsgemäß alternativ vorgeschlagen, dass die Buchse magnetisierbares Material umfasst, das mit magnetisierbarem Material des Schafts und/oder des Kopfes eine magnetische Kraft nutzend zusammenwirkt. Dabei können nur der Schaft, nur der Kopf oder beide Teile des Bolzens magnetisiert sein. Dies kann beispielsweise nach der gewünschten Stärke oder Dauer der Festlegung gewählt sein. Für eine magnetische Festlegung sind die Buchse / Hülse und/oder ggf. der Schaft und/oder der Kopf aus einem magnetisierbaren Material gefertigt. Als besonders vorteilhaft hat sich ein magnetisierbarer Stahl, vorzugsweise ein ferromagnetischer Werkstoff, wie Eisen, erwiesen. Auch Stahllegierungen mit anderen ferromagnetischen Stoffen wie Nickel und Kobalt sind verwendbar. Die Stärke der Magnetisierung des Schafts und/oder des Kopfes kann so gewählt sein, dass die Magnetisierung mindestens für die (Vor-)Montage des Hebelfederbolzens andauert und dann nach der (Vor-)Montage wieder über die Zeit abklingt oder dauerhaft besteht. Wenn elektrische oder elektronische Sensoren in Nachbarschaft zu dem Hebelfederbolzen bzw. der Reibungskupplung vorgesehen sind, können die magnetisierten Teile des Hebelfederbolzens nach dem Einbau des Hebelfederbolzens auch zur besseren elektromagnetischen Verträglichkeit wieder entmagnetisiert werden.

Als weitere erfindungsgemäße Variante kann der Schaft ein von ihm separates Kraftschlussverstärkungselement aufweisen, das zwischen der Innenseite der Buchse und der Außenseite des Schafts eingesetzt ist. Dies bewirkt eine konstruktiv einfache, aber dennoch vergleichsweise feste mechanische Verbindung durch einen zusätzlichen Formschluss zwischen der Buchse (/Hülse) und der Außenseite des Schafts. Das Kraftschlussverstärkungselement kann ein Ring, vorzugsweise ein Sicherungsring oder ein Sprengring sein, der weiter vorzugsweise aus einem Kunststoff oder aus einem Federstahl gefertigt ist. Zur Anbringung des Kraftschlussverstärkungselements kann der Schaft eine vorzugsweise um die Mantelfläche umlaufende Nut aufweisen, in die das Kraftschlussverstärkungselement ggf. unter Zuhilfenahme eines Werkzeugs, wie einer Zange, eingelegt wird. Alternativ oder zusätzlich dazu kann die Buchse / Hülse an einer inneren Oberfläche ebenfalls eine vorzugsweise umlaufende Nut aufweisen.

Eine weitere, erfindungsgemäße Alternative sieht vor, dass der Stoffschluss mittels einer Schweißverbindung realisiert ist. Diese Verbindungsart lässt sich in der industriellen Fertigung auf vergleichsweise einfache Weise und auch kostengünstig realisieren.

Es hat sich dabei als vorteilhaft erwiesen, wenn die Schweißverbindung eine Ultraschallschweißverbindung ist. Dies ist vorteilhaft, weil sich das Ultraschallschweißverfahren sowohl zum Fügen von thermoplastischen Kunststoffen als auch metallischen Werkstoffen eignet. Diese Vielfältigkeit bietet für die stoffschlüssige Verbindung zwischen Schaft und/oder Kopf und der Buchse bzw. Hülse eine weitreichende konstruktive Gestaltungsfreiheit. Neben dem Ultraschallschweißen sind auch andere Schweißverfahren denkbar, wobei sich die Reibschweißverfahren, wie das Ultraschallschweißen und das Rotationsreibschweißen, als besonders vorteilhaft und praktikabel erwiesen haben. Auch sonstige Laser- und Punktschweißverfahren sind denkbar.

Um mit wenig konstruktivem Aufwand beispielsweise das Zusammenwirken zwischen dem Schaft und/oder dem Kopf und der Buchse / Hülse des Hebelfederbolzens beeinflussen zu können, ist es von Vorteil, wenn, die Buchse / Hülse aus wenigstens zwei unterschiedlichen Werkstoffarten aufgebaut ist. Um beispielsweise gute Lagereigenschaften aufzuweisen und die Lebensdauerfestigkeit der Reibungskupplung zu verbessern, kann die Buchse / Hülse wenigstens an ihrer äußeren Mantelfläche und ggf. an einer oder mehreren Stirnflächen eine Beschichtung aus einem vorzugsweise thermoplastischen Kunststoff aufweisen. Als besonders geeignet hat sich hierfür Polyetheretherketon (abgekürzt PEEK) sowie andere Werkstoffe dieser Werkstoffuntergruppe erwiesen, da dieser Werkstoff mechanisch, thermisch und chemisch vergleichsweise hoch belastbar und damit zum Einsatz in einer Reibungskupplung gut geeignet ist.

Dabei ist die Schichtdicke der Beschichtung variabel und kann sich beispielsweise nach der zu erwartenden Beanspruchung der Buchse / Hülse und/oder der konkreten Ausführungsart der Reibungskupplung richten. Eine solche Kunststoffbeschichtung kann prinzipiell durch jedes für die eingesetzten Materialien geeignetes Beschichtungsverfahren realisiert werden. Ein Umspritzen der Buchse / Hülse hat sich dabei als besonders vorteilhaft erwiesen.

Eine weitere, erfindungsgemäße Variante der Erfindung sieht vor, dass der Kopf von Buchsenmaterial umgriffen ist. Auf diese Weise kann die Buchse / Hülse ggf. auch ohne eine zusätzlich eingebrachte Verbindungsart wie einem Gewindewirkeingriff, einer Magnetisierung oder einer Verschweißung allein durch den Materialeingriff bzw. das Umgreifen des Buchsenmaterials im Bereich des Kopfes und ggf. (auch) im Bereich des Schafts festgelegt werden. Auf diese Weise ist auch möglich, eine Reibung zwischen dem Kopf und dem Gehäuse und/oder der Hebelfeder zu reduzieren, und zwar insbesondere dann, wenn das Buchsenmaterial ein reibungsverminderndes Material etwa eine PEEK-Umspritzung aufweist. Es ist auch möglich, eine oder mehrere der vorstehenden Festlegungsarten wie den Gewindewirkeingriff, die Magnetisierung oder die Verwendung des Kraftschlussverstärkungselements mit dem Umgreifen des Kopfes durch das Buchsenmaterial zu kombinieren.

Für eine gute und ggf. reibungsarme Anlage des Bolzens an dem Deckel und/oder die Hebelfeder / Tellerfeder ist es von Vorteil, wenn die Buchse einen größeren Außendurchmesser als der Kopf aufweist. Es ist dabei möglich, eine oder mehrere der vorstehenden Festlegungsarten wie den Gewindewirkeingriff, die Magnetisierung oder die Verwendung des Kraftschlussverstärkungselements mit der konstruktiven Ausgestaltung zu kombinieren, dass die Buchse einen größeren Außendurchmesser als der Kopf aufweist.

Die vorliegende Erfindung kann in anderen Worten die (Vor-)Montage eines wenigstens zweiteiligen, dreiteiligen oder mehrteiligen Hebelfederbolzens mit möglichst geringem konstruktivem Aufwand gewährleisten. Durch die separate Ausführung der Buchse/Hülse von dem Schaft bzw. Kopf kann die Bruchgefahr gegenüber einer einteiligen Ausführung von Schaft, Kopf und Buchse/Hülse infolge einer Kerbwirkung bzw. von Kerbspannungen reduziert werden. Dabei können der Schaft und/oder Kopf mit der separat ausgebildeten Buchse/Hülse auf unterschiedliche, ggf. miteinander kombinierbare Arten miteinander verbunden sein. Wenn die separat zu Schaft und Kopf ausgebildete Buchse/Hülse mit beispielsweise einem PEEK-Werkstoff umspritzt ist, können Schadensbilder vermieden werden, die beispielsweise von Lagern bekannt sind. Beispielhaft kann hier die vorteilhafte Reduzierung von Eingrabungen genannt werden. Gegenüber einer einteiligen Ausführung.

Die erfindungsgemäße Reibungskupplung, die wie vorstehend aus- und weitergebildet sein kann, lässt sich besonders vorteilhaft als Anfahrkupplung in einem Antriebsstrang für ein Kraftfahrzeug, wie einem PKW, LKW oder einem sonstigen Nutzfahrzeug, einsetzen. Ein derart weitergebildeter Antriebsstrang zeichnet sich durch eine besonders einfache Montierbarkeit und eine hohe Lebensdauerfestigkeit aus.

Die Erfindung wird nachfolgend mit Hilfe einer Zeichnung näher erläutert. Dabei sind mehrere Ausführungsbeispiele dargestellt. Es zeigen:
Fig. 1 eine schematische Längsschnittansicht einer Reibungskupplung mit einem zweiteilig ausgeführten Hebelfederbolzen,
Fig. 2a eine schematische Längsschnittansicht eines ersten Ausführungsbeispiels eines Hebelfederbolzens, der einen Schaft und Kopf mit einer daran angebrachten Buchse/Hülse aufweist,
Fig. 2b eine schematische Längsschnittansicht eines zweiten Ausführungsbeispiels eines Hebelfederbolzens, der einen Schaft und Kopf mit einer daran angebrachten Buchse/Hülse aufweist,
Fig. 2c eine schematische Längsschnittansicht eines dritten Ausführungsbeispiels eines Hebelfederbolzens, der einen Schaft und Kopf mit einer daran angebrachten Buchse/Hülse aufweist,
Fig. 3 eine schematische Längsschnittansicht eines Hebelfederbolzens mit einem Schaft und einem Kopf, wobei eine Buchse/Hülse mittels einer Gewindeverbindung an dem Schaft angebracht ist,
Fig. 4 eine schematische Längsschnittansicht eines Hebelfederbolzens mit einem Schaft und einem Kopf, wobei eine Buchse/Hülse mittels einer magnetischen Kraft angebracht ist an dem Schaft und/oder dem Kopf angebracht ist,
Fig. 5a eine schematische Längsschnittansicht eines Hebelfederbolzens mit einem Schaft und einem Kopf sowie einer dazu separat angeordneten Buchse/Hülse, und eine Draufsicht auf ein separat angeordnetes Kraftverstärkungselement, wobei der Hebelfederbolzen und die Buchse/Hülse für eine Verbindung mittels des Kraftverstärkungselements vorbereitet sind,
Fig. 5b eine schematische Längsschnittansicht des Hebelfederbolzens aus Fig. 5a, an dem die Buchse/Hülse mittels des Kraftverstärkungselements angebracht ist,
Fig. 6a eine schematische Längsschnittansicht eines Hebelfederbolzen mit einem Schaft und einem Kopf sowie mit einer Buchse/Hülse, wobei der Hebelfederbolzen und/oder die Buchse/Hülse für eine stoffschlüssige Verbindung miteinander vorbereitet sind, und
Fig. 6b eine schematische Längsschnittansicht des Hebelfederbolzens aus Fig. 6a, an dem die Buchse/Hülse mittels einer stoffschlüssigen Verbindung angebracht ist.

Die Figuren sind lediglich schematischer Natur und dienen nur dem Verständnis der Erfindung. Die gleichen Elemente sind mit denselben Bezugszeichen versehen. Merkmale der einzelnen Ausführungsbeispiele können untereinander ausgetauscht werden oder sich ergänzen.

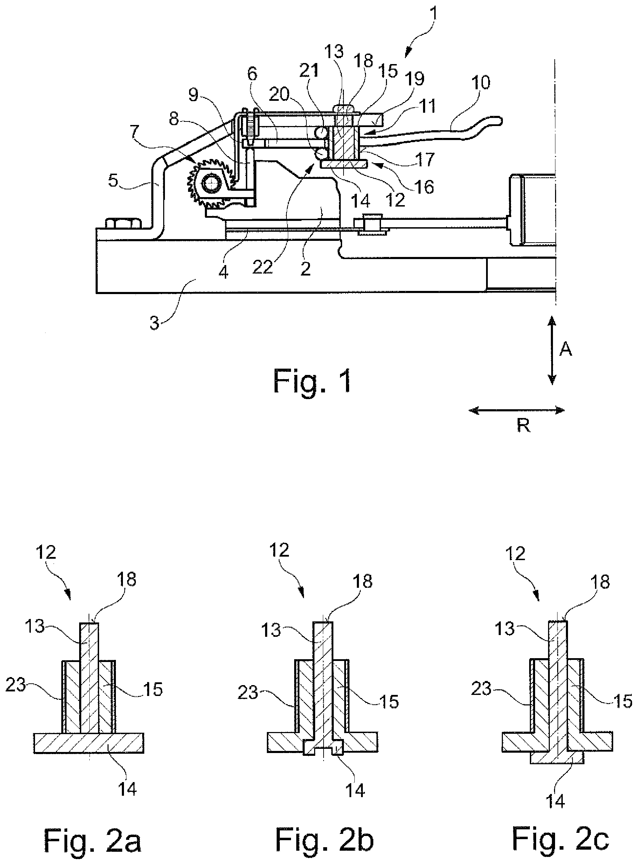

Fig. 1 zeigt eine schematische Schnittansicht einer Reibungskupplung 1, die insbesondere als Anfahrkupplung in einem Antriebsstrang eines Kraftfahrzeugs, wie eines PKWs, eines LKWs oder eines anderen Nutzfahrzeugs, einsetzbar ist.

Die Reibungskupplung 1 ist in Fig. 1 in einem eingekuppelten, das heißt geschlossenen Zustand dargestellt, in dem eine Kraft- bzw. Drehmomentübertragung möglich ist / sichergestellt ist. Sie weist eine Anpressplatte 2 und eine Gegen(druck)platte 3 auf, zwischen denen eine Kupplungsscheibe 4 zur Übertragung eines Drehmoments einklemmbar bzw. einpressbar ist. Die Anpressplatte 2 ist drehfest mit einem als Gehäusedeckel ausgebildeten Deckel 5 verbunden. Dabei ist die Anpressplatte 2 in axialer Richtung A nur begrenzt verlagerbar.

Des Weiteren weist die Reibungskupplung 1 eine als Tellerfeder ausgebildete Hebelfeder 6 auf, die als eine Art Anpressfeder zwischen der Anpressplatte 2 und dem Deckel 5 angeordnet ist und die Anpressplatte 2 in axialer Richtung A der Reibungskupplung 1 mit einer Anpresskraft beaufschlagt. Diese Anpresskraft der Anpressplatte 2 wirkt zwischen dem Deckel 5 und der Anpressplatte 2 und klemmt die Kupplungsscheibe 4 zwischen der Anpressplatte 2 und der Gegenplatte 3 ein. Infolgedessen ist in dem dargestellten geschlossenen Zustand eine Kraft bzw. ein Drehmoment des Antriebsstrangs übertragbar. Da eine Reibungskupplung 1 einem reibungsbedingten Verschleiß unterliegt, weist die Reibungskupplung 1 zudem eine Verschleißnachstelleinrichtung 7 mit einem Verstellring 8 auf, der an der Anpressplatte 2 angeordnet ist.

Aus Fig. 1 geht weiter hervor, dass die als Tellerfeder ausgeführte Hebelfeder 6 einen radial äußeren Bereich 9 aufweist. Der radial äußere Bereich 9 befindet sich in Anlage mit dem Verstellring 8 der Verschleißnachstelleinrichtung 7. Von dem radial äußeren Bereich 9 erstreckt sich eine Vielzahl von Hebelfederzungen 10 in radialer Richtung R nach innen. Zur Anbringung bzw. zur Lagerung der Hebelfeder 6 an dem Deckel 5 weist die Hebelfeder 6 zudem einen Kontaktbereich 11 auf, durch den sich ein Hebelfederbolzen 12 in axialer Richtung A hindurch erstreckt.

Der Hebelfederbolzen 12 weist einen Schaft 13 und einen Kopf 14 auf, dessen Außendurchmesser gegenüber dem Schaft 13 vergrößert bzw. erweitert ist. Der Schaft 13 ist über eine Teillänge seiner axialen Erstreckung von einer hülsenförmigen Buchse 15 umgeben, die sich in axialer Richtung A mit einer Stirnseite an dem durchmessererweiterten Kopf 14 des Hebelfederbolzens 12 abstützt. Demzufolge ist der (nur) aus dem Schaft 13 und dem Kopf 14 bestehende Hebelfederbolzen 12 gemeinsam mit der daran angeordneten Buchse 15 insgesamt zweiteilig ausgebildet, wobei diese gemeinsam eine Hebelfederzentrierung 16 ausbilden. Die Buchse 15 liegt mit einer Innenoberfläche an dem Schaft 13 des Hebelfederbolzens 12 und mit ihrer äußeren Mantelfläche 17 an dem Kontaktbereich 11 der Hebelfeder 6 an.

In Fig. 1 ist auch zu erkennen, dass der Hebelfederbolzen 12 in einer axialen Richtung, etwa in Fig. 1 oben, mit einem ersten axialen Ende 18 mit dem Deckel 5 verbunden ist. Der Kopf 14 des Hebelfederbolzens 12 bildet ein zweites axiales Ende in Form einer radialen Verbreiterung. Die Buchse 15 erstreckt sich zwischen einer Innenfläche 19 des Deckels 5 und dem Kopf 14 des Hebelfederbolzens 12 und befindet sich im gezeigten Zustand mit diesen in Anlage. Radial außen an der Buchse 15 sind zwei Drahtringe 20 und 21 angeordnet. Der Drahtring 20 ist zwischen dem Kopf 14 und einer Unterseite der Hebelfeder 6 angeordnet. Der Drahtring 21 ist zwischen einer Oberseite der Hebelfeder 6 und der Innenfläche 19 des Deckels 5 angeordnet. Der Hebelfederbolzen 12, die Buchse 15 und die Drahtringe 20 und 21 bilden eine Schwenklagerung 22 aus, über die die Anpressplatte 2 in axialer Richtung verlagerbar ist.

Zur öffnenden Betätigung der Reibungskupplung 1, das heißt bspw. zum Auskuppeln, lässt sich demnach die Vielzahl von Hebelfederzungen 10 über einen (nicht dargestellten) Hebel bzw einen Geber, wie einen CSC betätigen, wodurch sich die Hebelfeder 6 bzw. deren radial äußerer Bereich 9 durch die Schwenklagerung 22 in axialer Richtung A weg von der Anpressplatte 2 verlagert. Infolgedessen wird die Anpressplatte 2 ebenfalls in axialer Richtung A von der Kupplungsscheibe 4 wegbewegt und die Reibungskupplung 1 geöffnet.

Die vorstehende, schematisierte Beschreibung dient dem Verständnis der prinzipiellen Funktionsweise der Reibungskupplung 1. Im Folgenden soll nun die konstruktive Ausgestaltung des Hebelfederbolzens 12 näher betrachtet werden.

Der Hebelfederbolzen 12 ist wegen seiner hohen mechanischen Beanspruchung zweiteilig ausgeführt, nämlich in Form eines Bolzens mit dem Schaft 13 sowie dem Kopf 14 und,der separat dazu ausgebildeten Buchse 15, da sich dies im Vergleich zu einem einteilig ausgebildeten Hebelfederbolzen beispielsweise hinsichtlich der auftretenden Kerbwirkung als vorteilhaft erwiesen hat.

Fig. 2a zeigt ein erstes Ausführungsbeispiel des Hebelfederbolzens 12 in einer schematischen Schnittansicht. Wie oben beschrieben, ist der Hebelfederbolzen 12 zweiteilig ausgebildet und weist den Schaft 13 und den Kopf 14 auf, dessen Außendurchmesser gegenüber dem Schaft 13 vergrößert bzw. erweitert ist. Der Schaft 13 ist über eine in seiner axialen Richtung über eine Teillänge von der hülsenförmigen Buchse 15 umgeben, die sich in axialer Richtung A mit einer Stirnseite an dem durchmessererweiterten Kopf 14 des Hebelfederbolzens 11 abstützt. Dabei ist die Buchse 15 aus einem Stahl gefertigt, der sich als Lagerwerkstoff eignet.

Zur Verbesserung der Lagereigenschaften der Buchse 15 innerhalb des Kontaktbereichs 11 weist die Buchse 15 des Hebelfederbolzens 12 an ihrer äußeren Mantelfläche 17 eine als Umspritzung ausgeführte Beschichtung 23 auf, die in diesem Ausführungsbeispiel aus einem thermoplastischen Kunststoff, nämlich aus Polyetheretherketon (abgekürzt PEEK), besteht. Das heißt, dass die Buchse 15 aus zwei unterschiedlichen Materialen besteht, nämlich aus einem Stahl und einer ummantelnden Kunststoffbeschichtung. In Fig. 2a ist zudem zu erkennen, dass sich die Buchse 15 mitsamt ihrer Beschichtung 23 am Kopf 13 in axialer Richtung des Hebelfederbolzens 12 abstützt.

Fig. 2b zeigt ein zweites Ausführungsbeispiel des Hebelfederbolzens 12 in einer schematischen Schnittansicht. Auch dieser Hebelfederbolzen 12 weist die oben erläuterte Beschichtung 23 auf. Abweichend von dem in Fig. 2a gezeigten Ausführungsbeispiel ist der Kopf 14 des Hebelfederbolzens 12 allerdings vom Material der Buchse 15 umgriffen. Insbesondere ist der Kopf 14 von dem Stahlmaterial der Buchse 14 umgriffen.

Fig. 2c zeigt ein drittes Ausführungsbeispiel des Hebelfederbolzens 12 in einer schematischen Schnittansicht. Abweichend vom ersten und zweiten Ausführungsbeispiel weist die Buchse 15 in einem axialen Endbereich nach Art eines Bundes einen größeren Außendurchmesser als der Kopf 14 des Hebelfederbolzens 12 auf. Auch dieser Hebelfederbolzen 12 weist die oben erläuterte Beschichtung 23 auf.

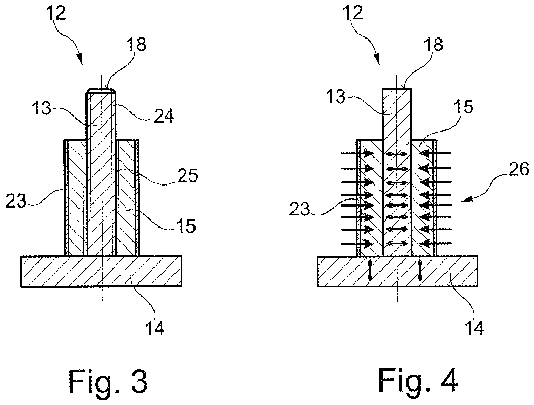

Fig. 3 zeigt in einer schematischen Schnittansicht eine erste Möglichkeit zur Verbesserung der (Vor-)Montage des Hebelfederbolzens 11 vorzugsweise vor seinem Einbau in die Reibungskupplung 1. Hierfür weist der Schaft 13 ein Außengewinde 24 auf, das mit einem geometrisch daran angepassten Innengewinde 25 der Buchse 15 in lösbarem Wirkeingriff steht. Somit lässt sich dieser Hebelfederbolzen 11 dadurch vormontieren, dass die Buchse 15 auf den Schaft 13 vorzugsweise bis zum Anschlag am Kopf 14 aufgeschraubt wird.

Fig. 4 zeigt in einer schematischen Schnittansicht eine zweite Möglichkeit zur Verbesserung der (Vor-)Montage des Hebelfederbolzens 12 vorzugsweise vor seinem Einbau in die Reibungskupplung 1. Hierfür weist die Buchse 15 einen magnetisierten Stahl auf, so dass eine magnetische Kraft zwischen dem Schaft 13 und/oder dem Kopf 14 und der magnetisierten Buchse 15 bewirkt wird, wobei diese magnetische Kraft in Fig. 4 durch eingezeichnete Wechselwirkungspfeile 26 angedeutet ist.

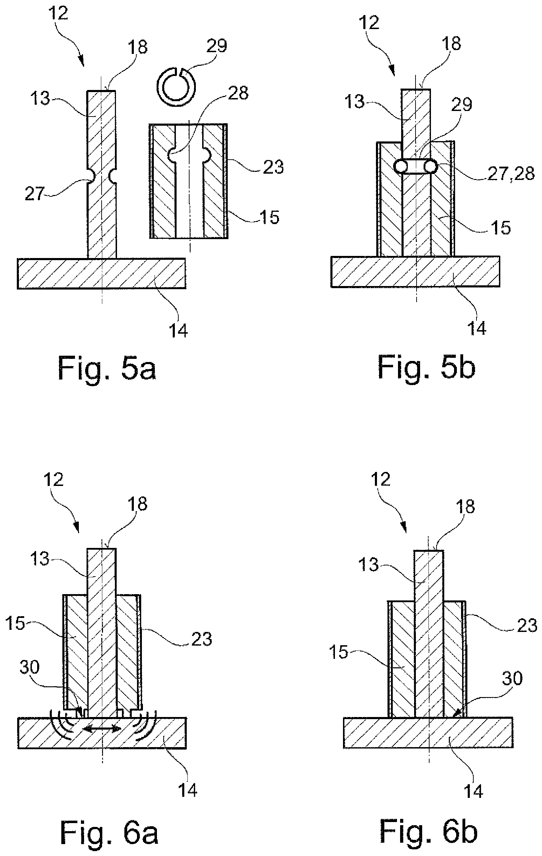

Die Fig. 5a und 5b zeigen in einer schematischen Schnittansicht eine dritte Möglichkeit zur Verbesserung der (Vor-)Montage des Hebelfederbolzens 12 vorzugsweise vor seinem Einbau in die Reibungskupplung 1.

Wie in Fig. 5a zu erkennen ist, weisen hierfür der Schaft 13 eine vorzugsweise umlaufende Nut 27 und die Buchse 15 eine entsprechend zur Position der Nut 27 angeordnete, vorzugsweise umlaufende Nut 28 auf. Zudem ist ein zum Hebelfederbolzen 11 separat ausgebildetes Kraftschlussverstärkungselement 29 zum Einsetzen in die beiden Nuten 27, 28 vorgesehen. Dieses Kraftschlussverstärkungselement 29 ist hier als Ring ausgebildet, der aus einem vorzugsweise leicht elastischen Kunststoffmaterial besteht.

Fig. 5a zeigt die Anordnung von Schaft 13 mit Nut 27, Buchse 14 mit Nut 28 und mit dem Kraftschlussverstärkungselement 29 aus Fig. 5a im zusammengefügten Zustand.

Die Fig. 6a und 6b zeigen in einer schematischen Schnittansicht eine vierte Möglichkeit zur Verbesserung der (Vor-)Montage des Hebelfederbolzens 12 vorzugsweise vor seinem Einbau in die Reibungskupplung 1.

Wie in Fig. 6a zu erkennen ist, weist die Buchse 15 an ihrem dem Kopf 14 zugewandten axialen Ende bzw. ihrer Stirnseite eine Materialzugabe 30 auf, die in Fig. 6a nach unten über die Stirnseite der Buchse 15 hervorsteht. Diese Materialzugabe 30 entspricht vorzugsweise dem Buchsenmaterial, wobei dieses Buchsenmaterial ein gut schweißbarer Stahl ist. In Fig. 6a ist mit einem Pfeil angedeutet, dass die Buchse 14 durch den Einsatz eines Ultraschallschweißverfahrens sowie unter Aufschmelzen der Materialzugabe 30 mit dem Kopf 14 verschweißt wird.

Fig. 6b zeigt den Hebelfederbolzen 12 aus Fig. 6a nach dem Utraschallschweißen, so dass dessen Kopf 14 mit der Buchse 15 ultraschallverschweißt ist.

Ausgehend von den dargestellten Ausführungsbeispielen lässt sich die erfindungsgemäße Reibungskupplung 1 in vielerlei Hinsicht abwandeln.

Beispielsweise ist es möglich, jede der drei in den Fig. 2a, 2b und 2c gezeigten Ausführungsformen des Hebelfederbolzens 12 durch jede der in den Fig. 3 bis 6b gezeigten Festlegungsmöglichkeiten (vor-)zumontieren. Es ist also jede Kombination der in Fig. 2a, 2b, 2c gezeigten Hebelfederbolzen 12 mit jeder (Vor-)montageart der Fig. 3 bis 6b möglich.

### Bezugszeichenliste

- 1: Reibungskupplung
- 2: Anpressplatte
- 3: Gegenplatte
- 4: Kupplungsscheibe
- 5: Deckel
- 6: Hebelfeder
- 7: Verschleißnachstelleinrichtung
- 8: Verstellring
- 9: radial äußerer Bereich
- 10: Vielzahl von Hebelfederzungen
- 11: Kontaktbereich
- 12: Hebelfederbolzen
- 13: Schaft
- 14: Kopf / zweites axiales Ende
- 15: Buchse (/Hülse)
- 16: Hebelfederzentrierung
- 17: äußere Mantelfläche
- 18: erstes axiales Ende
- 19: Innenfläche
- 20: Drahtring
- 21: Drahtring
- 22: Schwenklagerung
- 23: Beschichtung
- 24: Außengewinde
- 25: Innengewinde
- 26: magnetische Wechselwirkung als Pfeildarstellung
- 27: Nut
- 28: Nut
- 29: Kraftschlussverstärkungselement
- 30: Materialzugabe

- A: axiale Richtung der Reibungskupplung
- R: radiale Richtung der Reibungskupplung

## Patentansprüche

1. Reibungskupplung (1) für einen Antriebsstrang eines Kraftfahrzeugs, mit einem Deckel (), an dem über einen Hebelfederbolzen (12) eine Hebelfeder (6) gelagert ist, wobei der Hebelfederbolzen (12) einen Schaft (13) aufweist, der einen zum Außendurchmesser des Schafts (13) vergrößerten Kopf (14) besitzt, und wobei der Schaft (13) zumindest teilweise von einer Buchse umgeben ist, wobei die Buchse (15) kraft- oder stoffschlüssig am Schaft (13) oder am Kopf (14) festgelegt ist,
**dadurch gekennzeichnet, dass**
zwischen der Innenseite der Buchse (15) und der Außenseite des Schafts (13) ein Gewinde (24, 25) eingesetzt ist,
oder
die Buchse (15) magnetisierbares Material umfasst, das mit magnetisierbarem Material des Schafts (13) und/oder des Kopfes (14) eine magnetische Kraft nutzend zusammenwirkt,
oder
der Schaft (13) ein von ihm separates Kraftschlussverstärkungselement (29) aufweist, das zwischen der Innenseite der Buchse (15) und der Außenseite des Schafts (13) eingesetzt ist,
oder
Stoffschluss mittels einer Schweißverbindung realisiert ist,
oder
der Kopf (14) von Buchsenmaterial umgriffen ist.

2. Reibungskupplung (1) nach Anspruch 1, **dadurch gekennzeichnet, dass** die Reibungskupplung (1) eine mit der Hebelfeder (6) zusammenwirkende Verschleißnachstelleinrichtung (7) aufweist.

3. Reibungskupplung (1) nach Anspruch 1, **dadurch gekennzeichnet, dass** die Schweißverbindung eine Ultraschallschweißverbindung ist.

4. Reibungskupplung (1) nach einem der Ansprüche 1 bis 8, **dadurch gekennzeichnet, dass** die Buchse (15) einen größeren Außendurchmesser als der Kopf (14) aufweist.

## Claims

1. Friction clutch (1) for a drive train of a motor vehicle, having a cover (), on which a lever spring (6) is mounted via a lever spring bolt (12), the lever spring bolt (12) having a shank (13) which has a head (14) which is enlarged with respect to the external diameter of the shank (13), and the shank (13) being surrounded at least partially by a bush, the bush (15) being fixed in a non-positive or positively locking manner on the shank (13) or on the head (14), **characterized in that** a thread (24, 25) is used between the inner side of the bush (15) and the outer side of the shank (13), or the bush (15) comprising magnetizable material which interacts with magnetizable material of the shank (13) and/or the head (14) in a manner which utilizes a magnetic force, or the shank (13) has a non-positive reinforcing element (29) which is separate from it and is used between the inner side of the bush (15) and the outer side of the shank (13), or an integrally joined connection is realised by means of a welded connection, or the head (14) is engaged around by bush material.

2. Friction clutch (1) according to Claim 1, **characterized in that** the friction clutch (1) has a wear adjustment device (7) which interacts with the lever spring (6).

3. Friction clutch (1) according to Claim 1, **characterized in that** the welded connection is an ultrasonically welded connection.

4. Friction clutch (1) according to one of Claims 1 to 8, **characterized in that** the bush (15) has a greater external diameter than the head (14).

## Revendications

1. Embrayage à friction (1) destiné à une transmission d'un véhicule automobile, l'embrayage à friction comprenant un capot sur lequel un ressort de levier (6) est monté par le biais d'un axe de ressort de levier (12), l'axe de ressort de levier (12) comportant un arbre (13) qui possède une tête (14) élargie par rapport au diamètre extérieur de l'arbre (13), et l'arbre (13) étant au moins partiellement entouré par une douille, la douille (15) étant fixée à l'arbre (13) ou à la tête (14) par une liaison en force ou une liaison de matière,
**caractérisé en ce que**
un filetage (24, 25) est introduit entre le côté intérieur de la douille (15) et le côté extérieur de l'arbre (13),
ou
la douille (15) comprend un matériau magnétisable qui coopère avec un matériau magnétisable de l'arbre (13) et/ou de la tête (14) à l'aide d'une force magnétique, ou
l'arbre (13) comporte un élément de renforcement (29) séparé qui est inséré entre le côté intérieur de la douille (15) et le côté extérieur de l'arbre (13), ou la liaison de matière est réalisée à l'aide d'un joint soudé, ou
la tête (14) est entourée par la matière de la douille.

2. Embrayage à friction (1) selon la revendication 1, **caractérisé en ce que** l'embrayage à friction (1) comporte un dispositif de réglage d'usure (7) coopérant avec le ressort de levier (6).

3. Embrayage à friction (1) selon la revendication 1, **caractérisé en ce que** le joint soudé est un joint soudé réalisée par ultrasons.

4. Embrayage à friction (1) selon l'une des revendications 1 à 8, **caractérisé en ce que** la douille (15) a un diamètre extérieur supérieur à celui de la tête (14).
